# EUROPEAN PATENT APPLICATION

(11) **EP 4 582 286 A1**
(43) Date of publication of application: **09.07.2025**
(21) Application number: 24150219.4
(22) Date of filing: 03.01.2024
(51) Int. Cl.: B60L 3/00, B60W 20/50, B60L 1/00, B60W 50/023, B60L 3/04, B60L 3/12, B60L 58/18, B60W 60/00, B60W 50/029

(54) **DRIVERLESS VEHICULAR POWER MANAGEMENT**

(71) Applicant: Einride Autonomous Technologies AB, 111 56 Stockholm (SE)
(72) Inventor: VALTERSSON, Edvin, 111 56 Stockholm (SE); HOLMQVIST, Sebastian, 111 56 Stockholm (SE); ANDERSSON, Ola, 111 56 Stockholm (SE); GIEGOLD, Dennis, 111 56 Stockholm (SE); DABHI, Meetkumar Sanjaykumar, 111 56 Stockholm (SE); FLODIN, Linus, 111 56 Stockholm (SE); FJELLSTRÖM, Jakob, 111 56 Stockholm (SE); DANIELSSON, Fredrik, 111 56 Stockholm (SE); KLANG, Karl, 111 56 Stockholm (SE)
(74) Representative: Laine IP Oy

(57) **Abstract**

According to an example aspect of the present invention, there is provided an electric power management arrangement for a vehicular function, comprising a first energy storage and a second energy storage, the first energy storage being configured to charge the second energy storage, the first and second energy storages being configured to store energy in the form of electrical charge, at least one controller, and a connector configured to connect to a motor of an electrically powered actuator, the first and second energy storages being configured to power the motor via the connector.

## Description

### FIELD

The present disclosure relates to systems of vehicles powered at least in part by two or more energy storages. The present disclosure is particularly relevant, though not limited to, driverless vehicles.

### BACKGROUND

Vehicles need energy in order to propel themselves forward on a surface, such as the ground or on a road, or in air. Steering mechanisms are implemented in vehicles to enable selecting a direction in which the vehicle is to proceed.

A power assist steering system, mounted on a steering column, may be used to assist steering inputs from a driver, to make driving of a car, for example, lighter and easier for the driver. In case of an error state in a power assist steering system, control of steering may be handed to the driver directly, enabling the driver to safely continue to operate the vehicle, albeit using more force to implement steering inputs.

Automated driver-assist systems in cars may alert the driver to potentially dangerous situations, such as drifting inadvertently to another lane or excessive speed. Likewise a braking assist system may increase braking power responsive to a sudden braking input from the driver, to maximize braking performance in an unexpected situation. Autonomous vehicles may be associated with requirements relating to redundancy of systems therein.

Aircraft may be provided with plural independent hydraulic systems to enable pilots to continue providing effective inputs to flight control surfaces even in case isolated mechanical faults develop during flight.

### SUMMARY

According to some aspects, there is provided the subject-matter of the independent claims. Some embodiments are defined in the dependent claims.

According to a first aspect of the present disclosure, there is provided an electric power management arrangement for a vehicular function, comprising a first energy storage and a second energy storage, the first energy storage being configured to charge the second energy storage, the first and second energy storages being configured to store energy in the form of electrical charge, at least one controller, a motor which is part of an electromechanical steering arrangement of a driverless vehicle and a connector configured to connect to the motor of an electrically powered actuator, the first and second energy storages being configured to power the motor via the connector.

### BRIEF DESCRIPTION OF THE DRAWINGS

FIGURE 1 illustrates an example system in accordance with at least some embodiments of the present invention;
FIGURE 2A illustrates axle-mounted electro-mechanical actuation to provide steering;
FIGURE 2B illustrates axle-mounted electro-mechanical actuation to provide steering
FIGURE 3 illustrates an example apparatus capable of supporting at least some embodiments of the present invention;
FIGURE 4 illustrates a braking system for a vehicle, and
FIGURE 5 is a flow graph of a method in accordance with at least some embodiments of the present invention.

### EMBODIMENTS

Described herein are electric power management arrangements for vehicles, wherein redundancy in a vehicular actuator is obtained by using a first energy storage and a second energy storage. These arrangements may be for non-propulsion steering purposes, by which it is meant that the steering is to change a direction in which the vehicle proceeds, and the propulsion of the vehicle is powered by energy storage(s) distinct from the first and second energy storages. The first and second energy storages may each be configured to store electrical energy.

The first energy storage and the second energy storage may be of a same type of energy storage. The first energy storage and the second energy storage may be of different types of energy storage. In vehicles of various types, when electromechanical actuation is used, rather than hydraulic actuation, power needs to be provided to the actuator in a safe manner.

The second energy storage may have a different operating voltage and/or different capacity than the first energy storage. The second energy storage may have the same operating voltage and/or operating capacity as the first energy storage. The second energy storage may be used to power an electrically powered actuator in a vehicle in case the first energy store, or a related system, develops a fault. An electrically powered actuator may include a motor. The vehicle may be brought to a safe stop, for example, while relying on power from the second energy storage.

Further, a vehicle may be provided with redundant power delivery trains, each such train comprising a further second energy storage and a further motor of an electrically powered actuator connected to the respective further second energy storage.

Thus a beneficial effect in terms of enhanced safety may be overall achieved via increased redundancy.

The first energy storage may be a primary energy storage or main energy storage of a vehicle. For example, the first energy storage may be a main battery or main battery pack of a vehicle. The first energy storage may be, or comprise, a fuel cell, generator, or other type of hybrid technology providing electricity for the vehicle.

The first energy storage may be an energy storage that is linked to a main energy storage of a vehicle. For example, the first energy storage in the power delivery train arrangement may be a battery that is smaller than, but connected to, a main battery of the vehicle. For example, if a fuel cell or other type of electric generator is used by a vehicle, then the first energy storage may be a battery or other electricity storage device that is arranged to be charged by the fuel cell or generator.

The first energy storage may be separate from a primary energy storage of the vehicle. For example, the primary energy storage may be used for propulsion of the vehicle and/or other operations, whereas the first energy storage may be used exclusively for the power delivery train arrangement. The first energy storage may be charged or refilled separately from the primary energy storage, or it may be charged or refilled together with the primary energy storage.

Accordingly, the power delivery train arrangement may be used in a variety of vehicle types, such as fully electric, hybrid, or of combustion engine type.

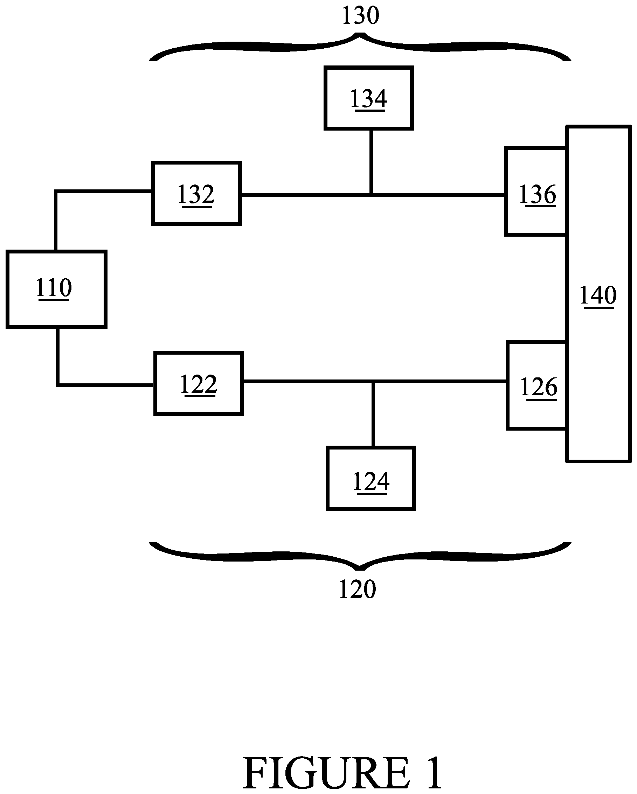

FIGURE 1 illustrates an example system in accordance with at least some embodiments of the present invention. The system comprises a first energy storage 110, which may comprise a battery or a fuel cell, for example. The system further comprises a first power delivery train 120 and a second power delivery train 130. First power delivery train 120 comprises a voltage converter 122, a second energy storage 124 and a motor 126. Motor 126, which is an electric motor, is configured to power an actuator 140. The motor may be comprised in the actuator. The motor may also be a separate component that is connected to the actuator. The actuator is an electrically powered actuator as the motors are electrically powered.

Electrically powered actuator 140 may provide electro-mechanic actuation, such as steering to a wheel, for example via a wheel axle, of a vehicle where the system is installed in. The electrically powered actuator may also power an excavator arm or other work implement of the vehicle, for example. As a further example, this actuator may power a flight control surface of an aircraft to provide steering of the aircraft.

By electro-mechanic steering it may be meant in this context that the actuation of the steering does not use a hydraulic device. The term electro-mechanic steering may mean that actuation of the steering includes hydraulics in some way, in addition to electro-mechanical actuation.

Electrically powered actuator 140 may be an electromechanical linear actuator. A motor or a plurality of motors comprised in or connected to the linear actuator may thus convert rotational motion to linear motion.

Second power delivery train 130 comprises a further voltage upconverter 132, a further second energy storage 134 and a further motor 136. Further motor 136, which is an electric motor, is configured to power electrically powered actuator 140 like motor 126 of first power delivery train 120. In some embodiments, there is only a single power delivery train and thus second power delivery train 130 is absent. Likewise, in some embodiments, power delivery trains, or the single power delivery train, lack or lacks a voltage upconverter. The first and second power delivery trains 120, 130 further comprise a suitable connector configured to connect the respective motors to the respective first and second energy storages. In some embodiments, the power delivery trains have different energy sources instead of sharing first energy storage 110, for example in case the vehicle has more than one lower-voltage system .

Electrically powered actuator 140 may be operated by either motor 126 or further motor 136. The number of power delivery trains may be higher than the two illustrated in FIGURE 1, such as three or four, for example. In each case, electrically powered actuator 140 may be operated by a single electric motor from among the motors 126, 136, ... installed in the system. The system may comprise a controller, or controllers, so configured as to enable only a single one from among motors 126, 136, ... to be active at a given time. The controller may comprise an electronic control unit, ECU . Also when there are more than two power delivery trains, each power delivery train may comprise a voltage upconverter, a second energy storage and a motor. Each power delivery train may also comprise a respective controller, or be linked to a respective controller of the system. As noted above, in some embodiments the voltage upconverter is absent, in which case each power delivery train may comprise a second energy storage and a motor. In some cases, only some of the power delivery trains comprise voltage upconverters while other power delivery trains do not comprise a voltage upconverter.

The controller, or controllers, may be configured to detect a fault in the system of FIGURE 1. The controller(s) may be configured to react to the fault by disabling the power delivery train 120, 130 where the fault is located, and directing another power delivery train to assume responsibility for actuating electrically powered actuator 140. The controller(s) may be configured to detect the fault based on monitoring a current used by electrically powered actuator 140 together with monitoring a current used or provided by the respective, active second energy storage 124, 134, ..., and wherein the controller(s) may be configured to determine whether the first energy storage provides less than a threshold amount of current to the system. Alternatively to or in addition to current, power provided from first energy storage 110 may be monitored by the controller(s) to determine the fault. Once a fault has been detected, a self-driving vehicle may bring itself to a controlled stop before the second energy storage is depleted . A controlled stop may be performed before a failure in the second or another control channel or power delivery train occurs. The stop may be needed in case, for example, first energy storage 110 has failed, since the vehicle may need primary power to continue steering in a nominal or normal operation mode. On the other hand in case the fault is located in a power delivery train, such as in a voltage upconverter 122, 132, ... , the vehicle could continue steering using another power delivery train. However, the level of redundancy might then be reduced to below a level required for operation considered to be safe, thus necessitating the controlled stop.

In some embodiments, if a problem is detected in a power delivery train, a controlled stop may be planned at a location further away than in case the first energy storage 110 fails. This is advantageous, since the controlled stop may then be performed at a service station where the fault may be more easily fixed than at a roadside, for example.

The controller(s) may be configured to respond to a fault in the first energy storage by controlling the vehicle to a controlled stop within at most a first distance, and the controller(s) may be configured to respond to a fault in a power delivery train, not preventing functioning of the first energy storage, by controlling the vehicle to a controlled stop within at most a second distance, longer than the first distance.

The controller(s) may be configured to respond to a fault in the first energy storage by continuing operation of the vehicle within a predetermined or calculated allowed operational window. An operational window may be defined by factors such as time, speed, location, distance, and/or other operational factors. Outside the allowed operational window, the vehicle may be controlled to stop.

The controller(s) may be configured to respond to a fault in the first energy storage by aborting the current and/or planned operations of the vehicle. The vehicle may be stopped directly. The vehicle may be stopped at a scheduled time and place further along a route. The route may be the current and/or planned route according to the current and/or planned operations. The route may be a new route that is determined after determining a fault.

The controller(s) may be configured to respond to a fault in the first energy storage by limiting vehicle operating capabilities. For example, an allowed top speed for the vehicle may be adjusted based on the fault, such as by lowering it. An allowed acceleration threshold may be adjusted. An allowed deceleration or braking threshold may be adjusted. An allowed steering or turning threshold may be adjusted.

The controller(s) may be configured to respond to a fault in the first energy storage by scheduling vehicle maintenance at a certain time or date, or within a time interval. The scheduling may be performed together with other computers or systems of the vehicle or linked to the vehicle. For example, the controller(s) may use the vehicle's transmission means, such as a wireless transceiver or a wired connection at a charging station, to transmit maintenance scheduling information to a server of a fleet management system.

The controller(s) may control the vehicle as described above with regard to fault detection and stopping directly or indirectly. For example, a controller used for controlling the power delivery train arrangement may be a main controller of a vehicle. The controller may be a separate controller that is dedicated to control the power delivery train arrangement, in case said controller may be configured to send a signal or other information to a vehicle controller that a fault is detected and/or that the vehicle should stop.

In particular, the controller(s) may be configured to determine the fault based on at least one of the following process steps. The controller(s) may monitor current and/or power use by electrically powered actuator 140. Further, the controller(s) may monitor a voltage of second energy storage 124 and a current and/or power provided by this second energy storage 124. Further, the controller(s) may be configured to determine an estimated voltage change over time of the second energy storage 124 based on the current and/or power used by electrically powered actuator 140, to compare the estimated voltage change over time of the second energy storage with a monitored voltage change over time of the second energy storage, and determine that the first energy storage does not provide enough current and/or or power responsive to the difference between the estimated and monitored values of voltage of the second energy storage being greater than a predetermined limit.

One way to observe a fault may be where the controller(s) determine that a motor 126, 136 is consuming more current, or power, than what is being delivered from first energy storage 110. This may imply that at least a part of the current, or power, consumed by the motor 126, 136 is being drawn from the respective second energy storage. This may be indicative of a fault, particularly when occurring for a longer period of time. A longer period of time in this sense may mean longer than what is considered normal in nominal operation of the steering system. Certain fluctuations and differences in power usage between the motor and the first energy storage may be normal for certain time instances and intervals. Such an interval may be a few seconds after a turning operation. These instances and intervals may also be compared over time, such that multiple turning operations are monitored to determine if there is a fault or not.

Each second energy storage is connected with first energy storage 110, which may act as a main power source in the system . First energy storage 110 may have the highest energy storage capacity from among the energy storages in the system. First energy storage 110 may for example be a primary battery of a battery-driven vehicle, such as an electric car or electric truck, or it may be connected to the primary battery. First energy storage 110 may be configured to charge the second energy storages 122, 132, ..., for example via a pre-charge circuit provided in the respective power delivery trains 120, 130. In particular, a pre-charge circuit may be used in case a voltage upconverter is not present. Each second energy storage, such as second energy storage 122 and further second energy storage 132, may comprise, for example, a battery, a capacitor or a supercapacitor. Not all of the second energy storages 122, 132, ... need be of a same type, rather, for example, second energy storage 122 may be a battery and further second energy storage 132 may be a capacitor or a supercapacitor. A supercapacitor is a capacitor which may use electrostatic double-layer capacitance and electrochemical pseudocapacitance, for example, to obtain an energy storage density 10 to 100 times higher than conventional capacitors based on solid dielectrics.

The second energy storage 124, 134, ... of an active power delivery train may provide electrical power to its respective motor 126, 136, ... in the event first energy storage 110 ceases to function. A motor may also draw power from both the first energy storage and the second energy storage at the same time. In at least some embodiments, the first and second energy storages are both configured to power the motor(s), and the second energy storage may provide power to the motor automatically when the first energy storage is unable to provide all the necessary power by itself. Under power from a second energy storage 124, 134, ... alone, the respective motor 126, 136, ... will be able to power the actuator 140. This provides a redundant power provision mechanism which enhances safety in a vehicular environment, in particular in case the vehicle is autonomous or partly autonomous, and it is possible that there is no human driver present to manually power steering , for example. In such a case, without redundant power provision, a single fault in first energy storage 110 could lead to loss of steering, creating high accident risk in a road environment.

The presence of second power delivery train 130 likewise enhances safety, as the extent of redundancy is increased to include e.g. a redundant motor. In embodiments with two power delivery trains, not only failure of the first energy storage but also failure of a motor, for example, is prevented from causing an accident due to the increased extent of redundancy. In some embodiments, motors 126, 136, ... of the different power delivery trains are not of identical designs and may be based on intentionally differing design principles, to reduce the risk of plural motors failing in the same situation. The same applies to second energy storages 124, 134, ... in that when they are different from each other, such as being a battery and a supercapacitor, they are less likely to fail at the same time . Furthermore, converters may be of different types, as may pre-charge circuits. Likewise the connectors providing power to the motors may be of different designs, to enhance robustness against simultaneous failure.

In some embodiments, the first power delivery train arrangement and the second power delivery train arrangement have the same components. The two power delivery train arrangements may be configured the same. One advantage of having the same or similar components and/or configuration is that control and monitoring may be less complex since only one type of configuration needs to be accounted for. The two power delivery train arrangements may also have the same type of interface with the controller(s), leading to smoother and more predictable data flow.

The first energy storage 110 may comprise at least one sub-unit configured to store energy, each one of the sub-units being connected to one or more of the second or further second energy storages 124, 134, ... , and each one of the sub-units being configured to be connected to the motor 126 and/or at least one further motor 136 of the electrically powered actuator 140. Each sub-unit may be, for example, one or more battery stacks or packs in a larger set of a battery package. A sub-unit may be removable and exchangeable, thus providing a simple way of fixing a broken part of the first energy storage if a permanent fault is detected, as the entire first energy storage does not need to be replaced or fixed.

Each one of voltage converters 122, 132, ... may be a direct current voltage boost converter, for example . A technically beneficial effect of a voltage boost converter is that voltage in the second energy storages 124, 134, ... becomes elevated compared to the voltage in first energy storage 110, which provides a large amount of instantly available power from the second energy storage, if needed. For example, a higher voltage may increase the available motor speed for a given motor, thus impacting the available motor power. Instantly available power may be needed to be able to move large masses in a controlled manner with high speed and accuracy. This is particularly useful in embodiments where the vehicle is an autonomous, self-driving truck or other heavy-duty vehicle, with our without a driver, where turning the wheels requires significantly more power than for a smaller vehicle , in particular due to the much higher wheel and wheel axle loads. Likewise, aircraft flight control surfaces may need a lot of power to turn. As noted above, in self-driving vehicles there may be no driver available to provide manual power to turn the wheels in case of steering system failure. As a numerical example, first energy storage may provide 24 volt power, which is doubled in the voltage upconverter to 48 volts . Other numerical examples include 30 volts converted to 60 volts , and 20 volts converted to 60 volts . In case there are plural power delivery trains with voltage upconverters, such as in the system of FIGURE 1, the voltage upconverters need not all have the same voltage multiplier. The voltage multiplier may be two, three or four, for example. A heavy-duty vehicle may be defined as a vehicle with at least one axle weight in excess of six tonnes, seven tonnes or eight tonnes. In some aspects, an inverter may be considered to be comprised in a motor.

A voltage converter may not be required in all configurations of the invention. For example, the first energy storage may be of a suitable voltage for controlling the actuator motor or motors, in which case the first energy storage and the second energy storage have the same voltage. In this case, a pre-charge circuit between the first and second energy storages may be particularly useful. However, a pre-charge circuit may not be necessary depending on the capabilities of the first and second energy storages.

The configuration of the first energy storage and second energy storage may vary depending on the capabilities of the available technology. In some instances, the first energy storage may be of a significantly higher voltage than this far described, such as 400 volts, 600 volts, or more. The voltage converter between the first and second energy storages may be configured to step down the voltage in some instances. The voltage converter may be a buck converter. Furthermore, the motor or motors of the actuator may be configured for other voltages than explicitly exemplified herein, upon which the second energy storage, and other components of the power delivery train arrangement may be configured accordingly. There are many factors affecting the appropriate and possible voltages in a vehicle system, and the exemplified voltages of different components herein do not need to be limiting to the operation of the invention.

For example, 48 volts has been observed to be suitable for enabling a fully-laden truck to fulfil any steering request. As explained above, this voltage may be higher or lower, and may also be impacted by the type of motor or motors used.

A further technical effect of implementing steering using electro-mechanic rather than electro-hydraulic-mechanic actuation lies in the fact that electro-mechanic actuation involves fewer energy conversions, leading to an inherently more energy-efficient solution. Also, while steering using a electro-hydraulic-mechanic actuation mechanism requires constant small adjustments, electro-mechanically adjusted steering only needs to intervene when a steering request is received from a node controlling the vehicle. These two effects together yield better energy efficiency, which may be used in obtaining an increased operating range using the second energy storage as well as the first energy storage , for example.

The Society of Automotive Engineers, SAE, has defined a six-level division of driving automation extent in automated driving systems, ADS, as follows: at level zero, the human driver performs all driving tasks such as steering, acceleration and braking. At level one, the vehicle has a single automated system for one driving task, such as cruise control to partially control the speed. At level two, the vehicle is configured to perform steering and acceleration while the human driver monitors all tasks and is able to take control at any time. At level three, the vehicle can detect environmental conditions and perform most driving tasks, but a human driver is still able to take control at any time. At level four ADS, the vehicle is configured to perform all driving tasks, however with restrictions as to a geographic area where this is allowed, and conditions, such as driving conditions, where automated operation is permitted. The restrictions may correspond to an operational design domain, ODD. Human override capacity is optional. Finally at level five ADS, the vehicle can perform all driving tasks without restrictions as to driving conditions, and human monitoring of the vehicle is not needed. As the level of automation increases, the quantity of data used increases. Redundancy in the steering system helps a vehicle to comply with level four and level five requirements in terms of stability against single points of failure.

Although not illustrated in FIGURE 1 for the sake of clarity, the system may further comprise fuses between the first energy storage 110 and each of the voltage upconverters 122, 132. Further, fuses may be disposed also between the voltage upconverters 122, 132 and their respective second energy storages 124, 134. Further fuses may be disposed between the second energy storages 124, 134 and their respective motors 126, 136. The fuses may be 50-ampere fuses, for example.

In a vehicle without a driver, that is, an autonomous or self-driving vehicle, there is in principle no need for a steering shaft to be rotated by a steering wheel in order to turn a wheel angle for steering. In a conventional, human-driven vehicle, the final motion pushing or pulling the wheel sideways is linear. Hence, utilizing a linear actuator to accomplish steering more directly will result in a significantly simpler design than converting rotation of a steering wheel to sideways linear translation. Conventionally, a steering arm and drag-link is used to translate rotational motion into translational motion. The drag-link pushes/pulls on a pitman arm that is fixed perpendicularly to the wheel hub, and hence turns the wheels left or right based on the rotational motion. In the context of the present disclosure, by driverless vehicle it is meant a vehicle which is configured to operate with no onboard driver. In other words, the vehicle may be autonomous or operated by a remote driver who is not inside the vehicle and not co-moving with the vehicle. A driverless vehicle may have humans onboard as passengers, however steering, for example, is in a driverless vehicle not powered by human muscle power or based on control inputs an onboard human driver provides to a power steering system. Steering may, in a driverless vehicle, be based on control inputs a remote driver provides. A driverless vehicle may have a driver's seat and a steering wheel, however the driverless vehicle is configured to at least have an mode of operation where steering is not based on inputs from an onboard driver.

In some steering systems with a physical steering wheel or an actuator that is not placed on the axle, the absolute wheel angle is affected by the chassis height. This is due to the fact that the physical geometry of the shaft going between chassis and axle changes when the chassis height is increased or decreased. More beneficially, the steering actuator may be physically mounted on the axle, hence decoupling wheel geometry from the height of the chassis.

Some vehicles, designed to be driven by humans, have a steering assist actuator placed on the steering column of the vehicle. These may either be electromechanical or hydraulic, assisted by a hydraulic pump. Other vehicles, in particular in case it isn't possible to place the driver in a space where the steering column can be mechanically linked to the front axle steering circuit, operate in a drive by wire manner. This implies that there is no mechanical link between the steering wheel and the steering circuit. Hence, the steering inputs from the steering wheel are transmitted electronically, optically or via hydraulic pressure. In these vehicles, hydraulic motors are most frequently used, where a hydraulic pump drives a number of hydraulic actuators, controlled by computer or via oil pressure.

To obtain the decoupling mentioned above, an electro-mechanic linear actuator may be installed between the front wheels of a vehicle to control wheel angle to obtain steering of the vehicle. The electro-mechanic linear actuator may be mounted on the axle connecting the front wheels to each other. This provides a further benefit in controllability provided by inherent accuracy of electric actuators and in terms of packaging, since the actuator may be placed low in between the wheels of the front axle of, for example, a four-wheel vehicle. Likewise, in some embodiments, an electro-mechanic linear actuator is placed in between the rear wheels on a tag axle to control the heading of the vehicle from rear wheel angles. This offers better packaging and control of the actuator compared to hydraulic steering. Single or dual motor solutions can be used on a tag axle. A tag axle is an auxiliary axle installed in conjunction with the rear axle(s) of a truck chassis.

In some embodiments electro-mechanic steering may be provided through both the front and the rear wheels. Both a front axle and a rear axle may comprise an electro-mechanic linear actuator as described herein. Having steering capabilities in both front axle and rear axle, or in multiple axles arranged along a vehicle chassis, may allow the vehicle to steer similarly in both front and rear directions. This may be useful for electric vehicles where propulsion motors are already able to function in both a front and rear driving direction with similar capabilities. This may be particularly advantageous for heavy-duty electric vehicles, since they are often required to reverse with great manoeuvring capabilities such as when approaching a loading dock, parking, or picking up goods or load. The electro-mechanic linear actuator as described herein could therefore be used with such vehicles despite the high axle loads associated with heavy vehicles. The specific configuration and placement of the axle and components of the electro-mechanic actuator may be selected to enable rear direction driving and steering at this greater capacity.

Being able to steer with greater capabilities in a reverse driving direction may be even more useful for an autonomous or remote-operated vehicle. This is because autonomous driving may use the same type of path planning, motion control, or other vehicle control systems for both forwards and rearwards driving. Similarly, remote operation of the vehicle is more agnostic to the direction of travel, making it more easy for a human operator to control the vehicle in both directions. Reversing may thus be as simple as simple as selecting a different viewpoint of the vehicle, but operate the vehicle as if driving forwards without having to account for any difference in steering power, angles, or capabilities.

In some embodiments, steering is provided from the front wheels or the rear wheels, only. This may lead to a less complicated system, and also requires fewer components and lowers weight and cost.

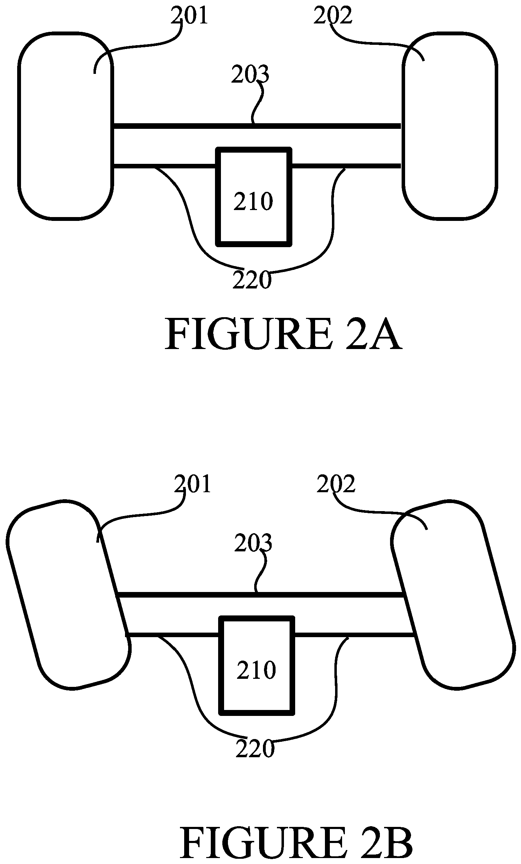

FIGURE 2A illustrates axle-mounted electro-mechanical actuation to provide steering. Left wheel 201 and right wheel 202 turn about the front axle 203. A linear actuator 210 is installed between the left 201 and right 202 wheels, such that at least a part of the actuator is physically between these wheels when the vehicle is not turning. A control column 220 is used to effect changes in heading. Linear actuator 210 may be mounted on axle 203.

FIGURE 2B illustrates axle-mounted electro-mechanical actuation to provide steering. The system is the same one as in FIGURE 2A, however here a control input has been made to turn left, causing linear actuator to move control column 220 to the right, thereby turning both wheels accordingly, as illustrated.

Overall concerning the system of FIGUREs 2A and 2B, one may state that is a steering mechanism for a wheeled vehicle, wherein a linear actuator is placed at least in part between two front wheels or two rear wheels of the vehicle, mounted on an axle connecting the two front wheels or the two rear wheels, the linear actuator configured to provide steering of the front or the rear wheels by moving a control column attached to both of the front wheels or the rear wheels. A more specific embodiment of this system is one which comprises two linear actuators, one placed between the front wheels and configured to steer the front wheels using a control column attached to both of the front wheels, and another linear actuator placed between the rear wheels and configured to steer the front wheels using a second control column attached to both of the rear wheels.

In an embodiment, the electro-mechanic linear actuator may be arranged to be centrally located along a longitudinal direction of an axle, for example a wheel axle. A benefit of placing the linear actuator substantially in the middle of an axle is that forces exerted on the axle and thus the linear actuator and its components, such as motors, are more evenly distributed. For example, when the linear actuator is arranged to control steering of wheels on a wheel axle of a vehicle, reaction forces or forces acting on the wheels of the vehicle may be translated to the linear actuator. A centrally located linear actuator would in this case also not experience different bending moments on a movable axle or shaft on the left and right side, as seen in the driving direction.

In an embodiment, the electro-mechanic linear actuator may be arranged to be located off-center as seen along a longitudinal direction of an axle, for example a wheel axle. This can provide a larger space being available for other components. For example, an electric autonomous heavy vehicle may require several large components that cannot be separated into smaller parts. Being able to place the linear actuator off-center allows for more continuous space in the vehicle. Another benefit of an off-center linear actuator is that the space in the center of the vehicle is freed up for components that would function in a better or more secure manner if centrally placed. For example, some components might require electromagnetic shielding from other components, or more even thermal insulation. Components that are more sensitive to shocks or collisions may also be located closer to the center of the vehicle. Furthermore, a linear actuator that can be placed anywhere along an axle allows for more design flexibility with regard to center of mass of an axle system or a vehicle, for example.

In an embodiment, one or more of the motors of the linear actuator may comprise sub motors. A motor of the linear actuator may consist of sub motors. In this way, each motor can be seen as a module being made up of two or more smaller motors that work in parallel. In the case of an electro-mechanic linear actuator comprising two or more motors, one of said motors may be made up of two or more sub motors, while the other motors are single motors. The number of sub motors for each motor can be more than two. Sub motors and single motors can be used in a number of combinations. One benefit of using smaller sub motors is replacing faulty or damaged motors may be more simple or require less expensive components. For example, the motors may be arranged in a modular manner wherein they are configured to be removed and inserted by a technician with relative ease, whereby a motor comprising two sub motors of which only one is faulty only needs replacement of that one faulty sub motor. This leads to less resources being needed for the motors, as well as less inventory space or inventory footprint required for each replacement part.

In an embodiment, sub motors may be provided by a motor comprising multiple stators that can independently or jointly influence the rotor. One benefit of this type of configuration is that redundancy may be provided in a relatively small motor package.

Sub motors as described herein may be used for the motors described with regard to the power delivery train arrangements.

Electro-mechanic actuator (and power arrangement) can be used for both front axle and tag axle, respectively. The tag axle may use one motor, and in case of fault it just shuts down. Alternatively, it could use the redundant system with two motors. The tag axle linear actuator can include a powertrain management arrangement as well. Any steerable axle can use it.

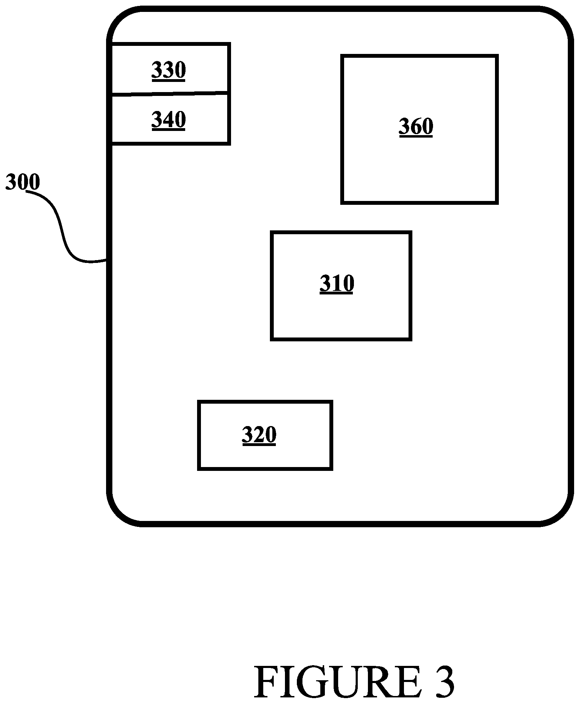

FIGURE 3 illustrates an example apparatus capable of supporting at least some embodiments of the present invention. Illustrated is device 300, which may comprise, for example, a controller of the system of FIGURE 1 or FIGURE 2. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300, such as switching motors on and off, for example . Processor 310 may be configured, at least in part by computer instructions, to perform actions.

Device 300 may comprise memory 320. Memory 320 may comprise random-access memory and/or permanent memory. Memory 320 may comprise at least one RAM chip. Memory 320 may be a computer readable medium. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300. Memory 320 may be transitory or non-transitory. The term "non-transitory", as used herein, is a limitation of the medium itself (that is, tangible, not a signal) as opposed to a limitation on data storage persistency (for example, RAM vs. ROM).

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with a suitable communication standard.

Device 300 may comprise user interface, UI, 360. UI 360 may comprise at least one of a display, a keyboard, a touchscreen, a vibrator arranged to signal to a user by causing device 300 to vibrate, a speaker or a microphone. A user may be able to operate device 300 via UI 360, for example to configure steering or braking parameters, or update software running in device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver. Device 300 may comprise further devices not illustrated in FIGURE 3.

Processor 310, memory 320, transmitter 330, receiver 340, and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

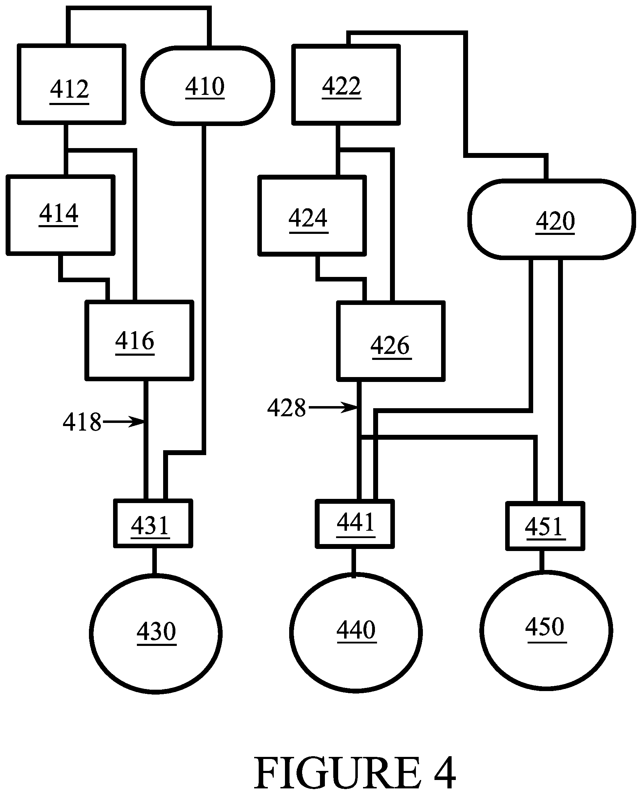

FIGURE 4 illustrates a braking system for a vehicle. A pneumatic brake system may advantageously be operated with no brake pedal. Such a brake system may comprise a primary electric actuation circuit and a secondary pneumatic circuit. The system may be configured to operate such that a blocked secondary circuit is actuated simultaneously with a primary brake circuit and pressure levels are cross referenced with the secondary circuit in order to detect latent failures on the secondary actuation circuit.

In case the primary brake circuit fails, it needs to be ensured that the secondary brake circuit does not contain latent faults, since braking is a safety-critical function in vehicles. Therefore pneumatic valve faults need to be detected before they pose a hazard. Conventionally in trucks or other heavy-duty vehicles, a brake system may be fitted with a brake pedal. The brake pedal may be provided with an electric interface to the brake system controller for nominal braking. If the nominal brake system fails, a number of backup valves may be manually actuated by the foot brake to cause braking.

The brake system of FIGURE 4 comprises differences to conventional brake system in that the foot brake has been replaced with an electrically controlled set of valves. These valves may be electro-mechanically controlled, for example. In this system is comprised a mechanism to detect latent faults in the backup valves.

The latent fault detection mechanism comprises, on each axle with braking, a pressure sensor configured to measure pressure at locations 418, 428 , a proportional valve 414, 424, a binary solenoid 3/2 valve 416, 426, an electro-pneumatic module 431, 441, 451, which is configured to decide whether secondary pressure will be gated to the axle, and a brake controller configured to receive electrical brake input from an autonomous driving software stack. Pressure-limiting valves 412, 422 may further be provided for each axle with braking function. Two air supplies 410, 420 provide pressurized air to the system. Front axle 430, drive axle 440 and tag axle 450 are illustrated in the figure.

Air supply 410, which may supply air at a pressure of 12 bar or more, provides this air to pressure-limiting valve 412 and electro-pneumatic module 431, via direct leads . Air supply 420, which may similarly supply air at a pressure of 12 bar or more, provides its air directly to pressure-limiting valve 422 and electro-pneumatic modules 441 and 451. While the black lines in FIGURE 4 cross, the pressurized air leads in the system do not interact in these crossings. Likewise binary solenoid 3/2 valve 426 provides air directly to electro-pneumatic modules 441 and 451 without its output leads interacting with those of air supply 410 or 420. Air is arranged to flow between the valves as illustrated in the figure.

During normal driving, each electro-pneumatic module gate supplies pressure to the axle as dictated by an electrical signal provided by a brake controller. As the vehicle brakes with the primary function, a valve position on the proportional valve may be requested, which is deemed equivalent to brake action . For example, a static valve mapping based on a calibration procedure may be used to select the valve position.

The pressure sensor may record this value and provide it to a controller external to the braking system, A comparison may then be made between the recorded value from the backup circuit and an expected pressure level and/or the primary brake action pressure. A second comparison may also be made on vehicle level. The controller external to the braking system may compare the sum of the backup brake action on the two axles, with the sum of the primary brake action to distinguish if the backup brake action is deemed sufficient to decelerate the vehicle as expected.

Both, or either, of these comparisons may result in a degraded complete vehicle mode, where the vehicle proactively comes to a safe stop with only primary brake in case of lost or un-dependable backup brake circuit. Hence, controlled braking can be performed when the backup brake has failed, preventing a situation in which both the primary brake and backup brake have failed.

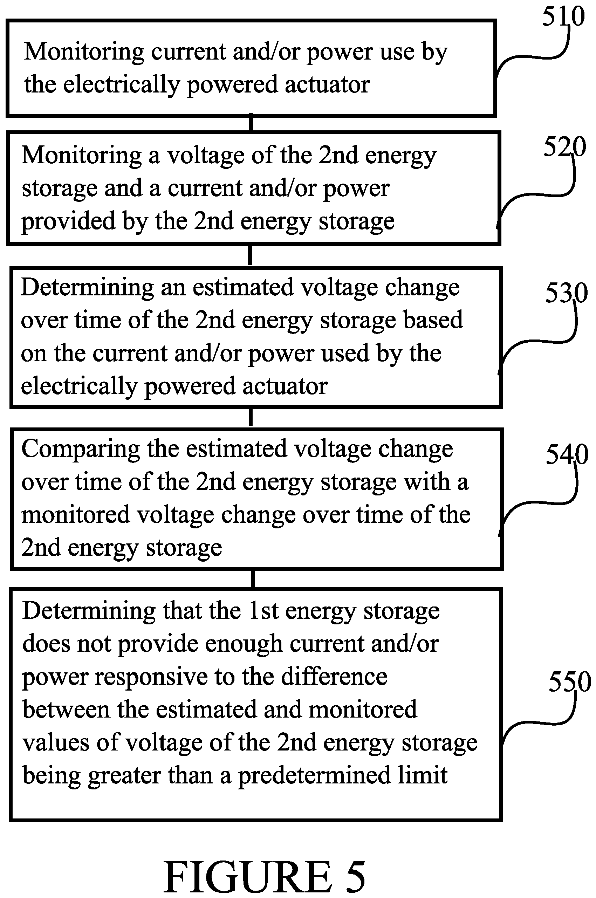

FIGURE 5 is a flow graph of a method in accordance with at least some embodiments of the present invention. The phases of the illustrated method may be performed in a device of FIGURE 1 or FIGURE 3, for example.

Phase 510 comprises monitoring current and/or power use by the electrically powered actuator. Phase 520 comprises monitoring a voltage of the second energy storage and a current and/or power provided by the second energy storage. Phase 530 comprises determining an estimated voltage change over time of the second energy storage based on the current and/or power used by the electrically powered actuator. Phase 540 comprises comparing the estimated voltage change over time of the second energy storage with a monitored voltage change over time of the second energy storage. Finally, phase 550 comprises determining that the first energy storage does not provide enough current and/or power responsive to the difference between the estimated and monitored values of voltage of the second energy storage being greater than a predetermined limit.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In some embodiments, a device or vehicle determines a fault type from among plural possible fault types, wherein at least one of the possible fault types is a soft faults responsive to which the device or vehicle performs a reset or reboot, and other possible fault types require service staff to control the fault. The determined fault type may be used in planning of vehicle routes and vehicles of a vehicle fleet.

In some embodiments there is provided an electric power management arrangement for a vehicular function, comprising a first energy storage and a second energy storage, the first energy storage being configured to charge the second energy storage, the first and second energy storages being configured to store energy in the form of electrical charge, at least one controller, and the electric power management arrangement comprises an electrically powered actuator, the first and second energy storages being configured to power the motor.

In some embodiments, steering may be powered from a secondary energy storage instead of the main energy storage responsive to a determination that the main energy storage of a vehicle is needed for a safety mechanism, such as a cooling or heating function of a cargo space. Certain cargoes need to be kept at a constant temperature, examples of these being medicines and foodstuffs.

In some embodiments, the electric power management arrangement comprises or is provided with plural types of motors and/or secondary power storages when there are two or more of these, for redundancy.

### INDUSTRIAL APPLICABILITY

At least some embodiments of the present invention find industrial application in vehicular power management, such as in driverless vehicles.

## Claims

1. An electric power management arrangement for a non-propulsion vehicular steering function of a driverless vehicle, comprising:
- a first energy storage and a second energy storage, the first energy storage being configured to charge the second energy storage, the first and second energy storages being configured to store energy in the form of electrical charge;
- at least one controller,
- a motor which is part of an electromechanical steering arrangement of the driverless vehicle, and
- a connector configured to connect to the motor of an electrically powered actuator, the first and second energy storages being configured to power the motor via the connector.

2. The electric power management arrangement according to claim 1, wherein the second energy storage device comprises one or more of: a battery, a capacitor and a supercapacitor

3. The electric power management arrangement according to claim 1 or 2, comprising one or more further second energy storages, each one of the further second energy storages being connected to the first energy storage such that the first energy storage device is configured to provide energy to the respective further second energy storage, and each one of the one or more further second energy storages being configured to be connected to a respective further motor of the electrically powered actuator.

4. The electric power management arrangement according to claim 3 , wherein the first energy storage comprises two or more sub-units configured to store energy, each one of the sub-units being connected to one or more of the second or further second energy storages, and each one of the sub-units being configured to be connected to the motor and/or at least one further motor of the electrically powered actuator.

5. The electric power management arrangement according to any preceding claim, further comprising a voltage converter coupled to the first energy storage to receive from the first energy storage electrical current at a first voltage, the voltage converter being configured to provide a second voltage, different from the first voltage, to the second energy storage.

6. The electric power management arrangement according claim 3 or any one of claims 4 - 5 as dependent on claim 3 , wherein the at least one controller is configured to selectively enable operation of only one from among the motor and the at least one further motor at a time.

7. The electric power management arrangement according to any preceding claim, wherein the electrically powered actuator the connector is configured to be connected to is an electromechanical linear actuator.

8. The electric power management arrangement according to any preceding claim, wherein the at least one controller is configured to detect a fault in the electric power management arrangement.

9. The electric power management arrangement according to claim 8, wherein the at least one controller is configured to detect the fault based on monitoring at least one of: current and power used by the electrically powered actuator together with monitoring a current and/or power used or provided by the second energy storage, and wherein the at least one controller is configured to determine that a fault has occurred based on the first energy storage providing less than a threshold amount of current and/or power to the electric power management arrangement.

10. The electric power management arrangement according to any of claims 1-8, wherein the at least one controller is configured to:
- monitor at least one of: current and power use by the electrically powered actuator ;
- monitor a voltage of the second energy storage and a current and/or power provided by the second energy storage;
- determine an estimated voltage change over time of the second energy storage based on the current and/or power used by the electrically powered actuator,
- compare the estimated voltage change over time of the second energy storage with a monitored voltage change over time of the second energy storage, and
- determine that the first energy storage does not provide enough current and/or power based on the difference between the estimated and monitored values of voltage of the second energy storage being greater than a predetermined limit.

11. The electric power management arrangement according to any preceding claim, configured to provide, via the electrically powered actuator, steering of a wheel of a heavy-duty vehicle.

12. The electric power management arrangement according to claim 11, wherein the heavy-duty vehicle comprises an electric and/or autonomous heavy-duty vehicle.

13. The electric power management arrangement according to claim 8 or any of claims 9 - 12 as dependent on claim 8, configured to cause an electric vehicle the electric power management arrangement is installed in to determine a category of the fault, and to respond to the fault in a response manner which is selected based on the category of the fault.

14. The electric power management arrangement according to claim 13, wherein the electric power management arrangement is configured to compel the electric vehicle to stop within a predefined time period as a response to the category of the fault being a first category.

15. The electric power management arrangement according to claim 13 or 14, wherein the electric power management arrangement is configured to compel the electric vehicle to stop within a second predefined time period, shorter than the predefined time period, as a response to the category of the fault being a second category.
